# EUROPEAN PATENT APPLICATION

(11) **EP 4 844 368 A1**
(43) Date of publication of application: **25.11.2026**
(21) Application number: 26168620.8
(22) Date of filing: 27.03.2026
(51) Int. Cl.: G01N 3/303

(54) **IMPACT TOOL FOR A PENDULUM TESTING APPARATUS FOR IMPACT TESTS OF A SPECIMEN, AND TESTING APPARATUS COMPRISING SAID TOOL**

(30) Priority: 23.05.2025 IT 202500011836
(71) Applicant: Cesare Galdabini S.p.A., 20121 Milano (IT)
(72) Inventor: PUSTERLA, Luca, 20121 Milano (IT); BELCASTRO, Mauro, 20121 Milano (IT)
(74) Representative: Leihkauf, Steffen Falk

(57) **Abstract**

Impact tool (1) suitable to be mounted in a pendulum impact tester (100) for resilience testing of a specimen, comprises a tool base body (10) defining a coupling surface and an opposite front surface (12), removable engagement means (30); a first impact fin (21) extending protruding from said front surface (12) along a first fin plane (P1), said first impact fin (21) defining two lateral surfaces (21', 21") incident with each other at a first fin straight line of incidence (25) lying on said first fin plane (P1) and connected to each other in proximity of said first fin straight line of incidence (25) by means of a first fin connecting surface (21‴), said first fin (21) defining a first fin cross-section (28) orthogonal to said first fin straight line of incidence (25), said first fin cross-section being constant along said first fin straight line of incidence (25) and symmetrical to said first fin plane (P1); a second impact fin (22) extending protruding from said front surface (12) along a second fin plane (P2), said second impact fin (22) defining two lateral surfaces (22', 22") incident with each other at a second fin straight line of incidence (26) lying on said second fin plane (P2) and connected to each other in proximity of said second fin straight line of incidence (26) by means of a second fin connecting surface (22‴), said second fin (22) defining a second fin cross-section (29) orthogonal to said second fin straight line of incidence (26), said second fin cross-section being constant along said second fin straight line of incidence (26) and symmetrical with respect to said second fin plane (P2), wherein said first fin plane (P1) and said second fin plane (P2) are coincident with each other, and wherein said first fin straight line of incidence (25) and said second fin straight line of incidence (26) are parallel to each other, and wherein said first fin connecting surface (21‴) and said second fin connecting surface (22‴) are directed away from each other, said impact tool (1) defining a central inversion axis (27), parallel to said first fin straight line of incidence (25) and to said second fin straight line of incidence (26) equidistant from an intersection line between said first fin connecting surface (21‴) and said first fin plane (P1) and from an intersection line between said second fin connecting surface (22‴) and said second fin plane (P2), wherein said coupling surface (11) and said removable engagement means (30) have a shape symmetrical with respect to said central inversion axis (27) so as to allow two different mountings of said impact tool rotated 180 degrees with respect to each other about said inversion axis (27).

## Description

### Field of the invention

The present invention relates to an impact tool for a pendulum impact tester for resilience testing of a specimen, in particular for Charpy impact tests, as well as to a tester for resilience testing, having said impact tool.

### Background art

Resilience is the ability of a material to absorb energy during a deformation or an impact without breaking.

A known tester comprises a base, at least one upright extending from the base, a specimen holder defining a specimen seat, an oscillating pendulum hammer pivotally connected to the at least one upright about a horizontal axis of oscillation so as to oscillate along an oscillation plane orthogonal to the horizontal axis of oscillation and passing through the specimen seat according to a predetermined direction of impact moving towards the specimen seat.

The pendulum hammer comprises a hammer head opposite to the horizontal axis of oscillation and supports an impact tool.

The specimen is in the form of a bar, generally a metal bar, elongated along a main direction, and is laid on the specimen holder with the main direction thereof arranged orthogonally with respect to the impact direction, so as to be struck by the impact tool at the midpoint of the length thereof.

The hammer starts the rotation stroke thereof in descent from a preset starting angle measured with respect to the vertical, and continues the rotation stroke thereof in ascent up to a stopping angle after having gone past the specimen following the breakage thereof.

The resilience of the material of the specimen is measured by means of the measurement of the energy absorbed by the specimen in the impact.

The energy absorbed is measured as the difference between the energy of the hammer at the preset starting angle and the energy of the hammer at the stopping angle.

Therefore, knowing the mass of the hammer, the initial energy and the final energy of the hammer may be calculated by means of the measurement of the height of the hammer at the preset starting angle and at the stopping angle.

Such a tester is generally known in the art as a pendulum impact tester for Charpy impact tests.

The Charpy notched bar impact test method was disclosed by Augustin Georges Albert Charpy and is now established. The Charpy impact test may be used to qualitatively classify a sample.

To ensure the reproducibility of the measurement, some standards define the features of pendulum impact testers, which are, for example, UNI EN ISO 148-1 relating to the Charpy impact test method for metal materials, UNI EN ISO 148-2 relating to the verification of Charpy impact testers for metal materials, ASTM E23 (Standard Test Methods for Notched Bar Impact Testing of Metallic Materials).

The UNI EN ISO 148-2 standard, in particular, also regulates the features of some different geometries of impact tools.

The prior art provides for mounting an impact tool in the respective coupling seat of the hammer.

Such impact tool must be replaced with a new one after a certain number of impacts, so as to ensure the necessary reliability and repeatability of the measurement.

Among other things, the impact tool must be made of a material having preset physical features, and exhibit preset surface roughness features, and rather stringent dimensional tolerances.

This results in the cost of production and sale of such a known impact tool being rather high, thus affecting the cost of the single impact test.

Furthermore, sometimes a variety of impact tests are required, with impact tools which are different from one another, thus entailing the need to purchase a variety of impact tools and to store them in a tool warehouse, and further, to interchange them every time a different test is to be performed. This requirement also affects the cost of the single impact test.

Therefore, the need is felt to provide a new impact tool which, while complying with the features set by standards, strongly reduces the cost of the single impact test, substantially increasing the useful life of the tool, or allowing the performance of impact tests having different features from one another by means of the same impact tool.

### Summary of the invention

It is the object of the present invention to devise and provide an impact tool adapted to be mounted on a pendulum impact tester for resilience tests of a specimen which allows to satisfy the above-mentioned needs and to at least partially overcome the drawbacks complained above with reference to the background art.

In particular, it is an object of the present invention to provide an impact tool adapted to be mounted on a pendulum impact tester for resilience tests of a specimen, allowing to achieve a useful life of the tool far superior with respect to that of known impact tools, thus allowing the performance, in a reliable and repeatable manner, of a number of tests far greater with respect to known impact tools.

It is another object of the present invention to provide an impact tool adapted to be mounted in a pendulum impact tester for resilience tests of a specimen, which allows a variety of impact tests, having different features from one another, to be performed by means of the same impact tool.

It is another object of the present invention to provide a tester for resilience testing of a specimen, allowing the aforesaid requirements to be met and to at least partially obviate the drawbacks complained above with reference to the prior art.

These and further objects and advantages are achieved by an impact tool adapted to be mounted in a pendulum impact tester for resilience tests of a specimen, as well as by a pendulum impact tester for resilience tests of a specimen comprising the aforesaid impact tool, in accordance with the independent claims.

Further objects, solutions, and advantages are present in the embodiments described below and claimed in the dependent claims.

### Brief description of the drawings

The invention will be shown below by the description of embodiments thereof, given by way of non-limiting example, with reference to the accompanying drawings, in which:

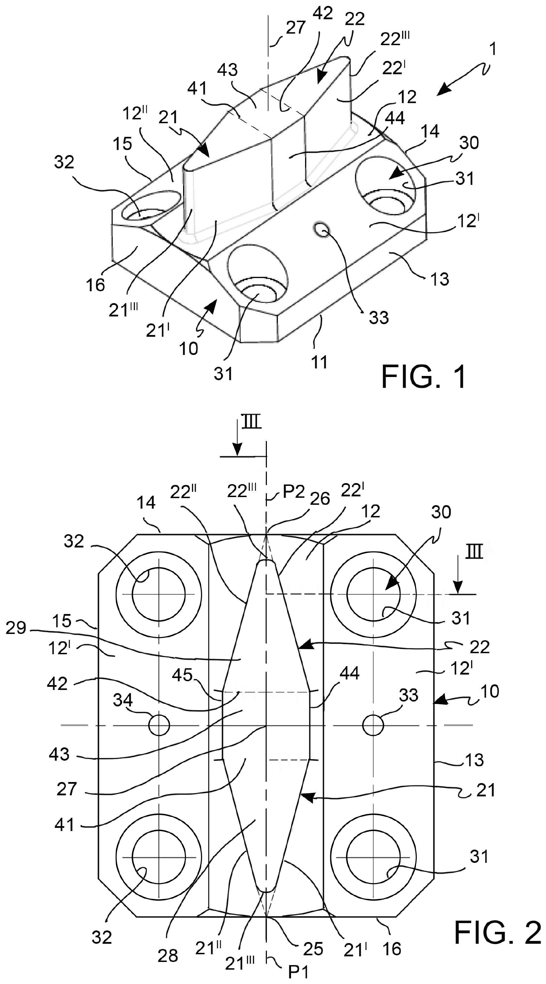

- Figure 1 shows an angled isometric view of an impact tool for a pendulum impact tester for resilience testing of a specimen, in accordance with the invention;
- Figure 2 shows an orthogonal top view of the impact tool of Figure 1;
- Figure 3 shows a sectional view of the impact tool of Figure 2, along the cross-section plane III shown in Figure 2;
- Figure 4 shows a partial cross-section of a first type of impact fin of the impact tool of Figure 2;
- Figure 5 shows a partial cross-section of a second type of impact fin of the impact tool of Figure 2;

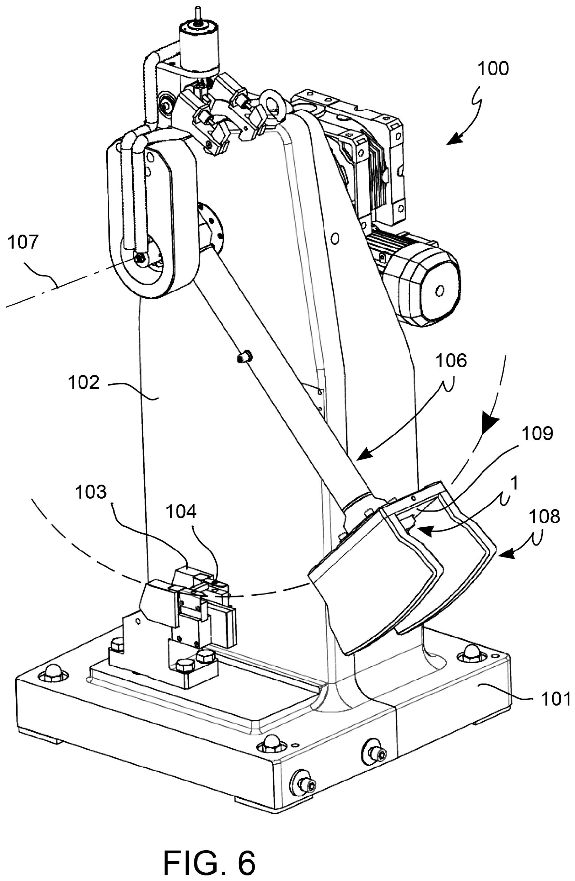

- Figure 6 shows an angled isometric view of a pendulum impact tester for resilience testing of a specimen, comprising the impact tool of Figure 1;

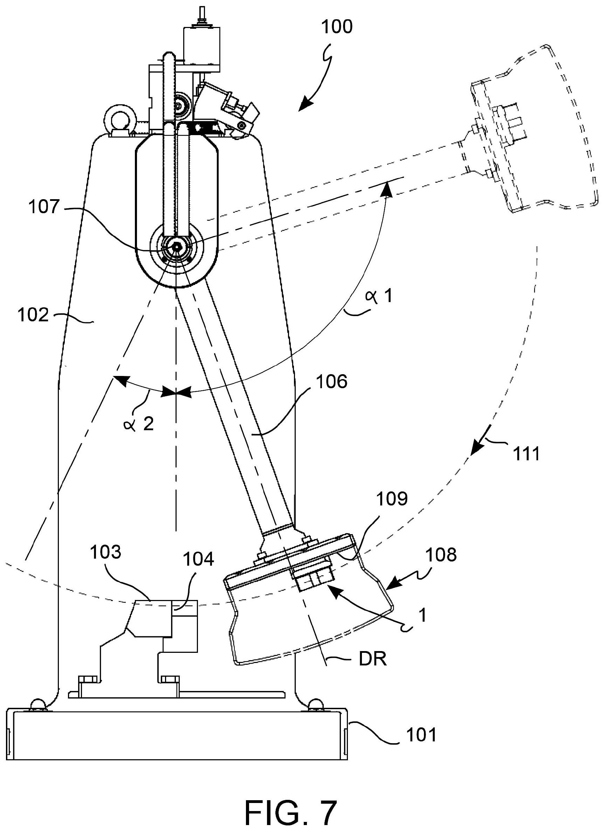

- Figure 7 shows an orthogonal side view of the tester of Figure 6;

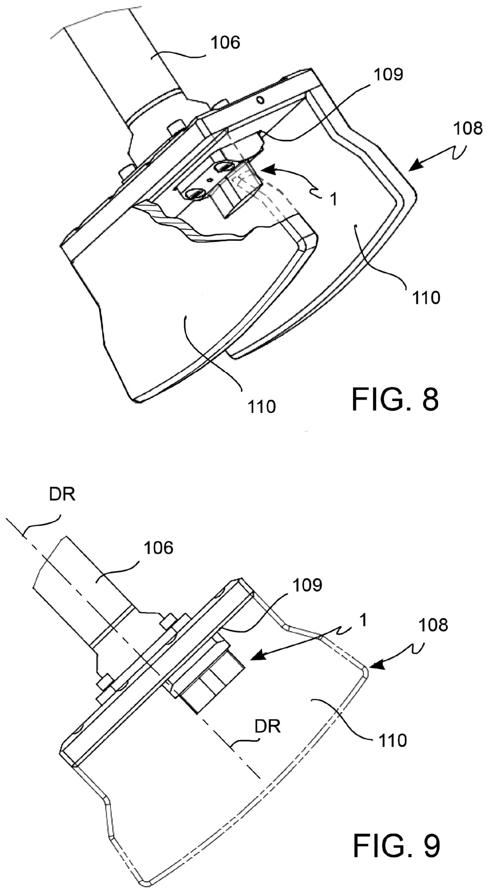

- Figure 8 shows a detail of Figure 6 comprising a hammer pendulum of the impact tester in which the impact tool of Figure 1 is mounted, in which a portion of a side wall of the hammer has been removed to allow observation of the impact tool mounted inside the hammer pendulum;
- Figure 9 shows a side view of the hammer pendulum of Figure 8, in which a side wall of the pendulum hammer has been removed to allow observation of the impact tool of Figure 1 mounted therein.

### Description of preferred embodiments

With reference to the Figures, an impact tool for a pendulum impact tester for resilience testing of a specimen, in accordance with the invention, is overall indicated with reference numeral 1.

A pendulum impact tester is indicated with reference numeral 100.

Such a tester comprises a base 101, at least one upright 102 extending from the base 101, a specimen holder 103, for example connected to the base 101, and defining a specimen seat 104, an oscillating pendulum hammer 106 pivotally connected to the at least one upright 102 about a horizontal axis of oscillation 107 so as to oscillate along an oscillation plane orthogonal to the horizontal axis of oscillation 107 and passing through the specimen seat 104 according to a predetermined direction of impact 111 moving towards said specimen seat 104.

The pendulum hammer 106 comprises a hammer head 108 opposite to the horizontal axis of oscillation 107 and defines an impact tool coupling seat 109.

In accordance with an embodiment, the pendulum hammer head 108 is in the shape of an inverted letter U, and comprises a central body comprising said impact tool coupling seat 109 and two side walls 110 parallel to each other and to the oscillation plane, which define a central space therebetween. The impact tool seat 109 is arranged along the oscillation plane and the two lateral walls 110 are equidistant from the oscillation plane and arranged on opposite sides with respect to the oscillation plane.

The specimen is in the form of a bar, generally a metal bar, elongated along a main direction, and is laid on the specimen holder 103 with the main direction thereof arranged orthogonal with respect to the impact direction 111, so as to be struck by the impact tool 1 at the midpoint of the length thereof.

The pendulum hammer starts the rotation stroke thereof in descent from a preset starting angle α1 measured with respect to the vertical, and continues the rotation stroke thereof in ascent up to a stopping angle α2 after having gone past the specimen following the breakage thereof.

The resilience of the material of the specimen is measured by means of the measurement of the energy absorbed by the specimen in the impact.

The energy absorbed is measured as the difference between the energy of the pendulum hammer at the preset starting angle α1 and the energy of the hammer at the stopping angle α2.

Therefore, knowing the mass of the pendulum hammer, the initial energy and the final energy of the pendulum hammer may be calculated by means of the measurement of the height of the hammer at the preset starting angle α1 and at the stopping angle α2.

The tester 100 is configured to perform the Charpy impact test method.

The impact tool 1 comprises a tool base body 10 defining a coupling surface 11 suitable for coupling to said impact tool coupling seat 109, and an opposite front surface 12, said coupling surface 11 and said front surface 12 being connected to each other by means of lateral surfaces of base body 13, 14, 15, 16.

Furthermore, the impact tool 1 comprises removable engagement means 30 capable of removably engaging said base body 10 with said impact tool coupling seat 109.

The impact tool 1 further comprises a first impact fin 21 extending protruding from said front surface 12 along a first fin plane P1.

The first impact fin 21 defines two lateral surfaces 21', 21" incident with each other at a first fin straight line of incidence 25 lying on said first fin plane P1.

The two lateral surfaces 21' and 21'' are connected to each other close to the first fin straight line of incidence 25 by means of a first fin connecting surface 21‴.

The first fin 21 defines a first fin cross-section 28 orthogonal to said first fin straight line of incidence 25.

The first fin cross-section is constant along the first fin straight line of incidence 25 and symmetrical with respect to the first fin plane P1.

In other words, the two first fin lateral surfaces 21' and 21'' and the first fin connecting surface 21‴ are described by a directrix line parallel to the first fin straight line of incidence 25.

In other words, the two first fin lateral surfaces 21' and 21'' and the first fin connecting surface 21‴ are all orthogonal to a plane orthogonal to said first fin straight line of incidence 25.

The impact tool 1 further comprises a second impact fin 22 extending protruding from said front surface 12 along a second fin plane P2.

The second impact fin 22 defines two second fin lateral surfaces 22', 22" incident at a second fin straight line of incidence 26 lying on the second fin plane P2.

The two second fin lateral surfaces 22' and 22'' are connected with each other in proximity of the second fin straight line of incidence 26 by means of a second fin connecting surface 22‴.

The second fin 22 defines a second fin cross-section 29 orthogonal to the second fin straight line of incidence 26.

The second fin cross-section 29 is constant along the second fin straight line of incidence 26 and symmetrical with respect to the second fin plane P2.

In other words, the two second fin lateral surfaces 22' and 22'' and the second fin connecting surface 22‴ are described by a directrix line parallel to the second fin straight line of incidence 26.

In other words, the two second fin lateral surfaces 22' and 22'' and the first fin connecting surface 22‴ are all orthogonal to a plane orthogonal to said second fin straight line of incidence 26.

The first fin plane P1 and the second fin plane P2 are coincident with each other.

The first fin straight line of incidence 25 and said second fin straight line of incidence 26 are parallel to each other.

The first fin connecting surface 21''' and the second fin connecting surface 22‴ are directed away from each other.

The impact tool 1 defines a central inversion axis 27 lying on the first fin plane P1 and the second fin plane P2, parallel to the first fin straight line of incidence 25 and to the second fin straight line of incidence 26, and equidistant from the intersection between the first fin connecting surface 21‴ and the first fin plane P1, and from the intersection between the second fin connecting surface 22‴ and the second fin plane P2.

The coupling surface 11 of the base body 10 and the removable engagement means 30 have a shape symmetrical with respect to the central inversion axis 27, so as to allow two different mountings of said impact tool, rotated 180 degrees with respect to each other about the inversion axis 27.

In accordance with an embodiment, the two lateral surfaces 21' and 21" of the first impact fin 21 are flat surfaces.

In accordance with an embodiment, the two lateral surfaces 22', 22'' of the second impact fin 22 are flat surfaces.

In accordance with an embodiment, the first fin 21 defines a rear end of first fin 41 opposite to the first fin connecting surface 21''', and the second fin 22 defines a rear end of second fin 42 opposite to the second fin connecting surface 22‴. The rear end of first fin 41 faces the rear end of second fin 42.

In accordance with an embodiment, the value of the width of the rear end of first fin 41, measured in a direction orthogonal to the first fin plane P1 between the two lateral surfaces of the first fin 21', 21", is equal to the value of the width of the rear end of second fin 42, measured in a direction orthogonal to the second fin plane P2 between the two lateral surfaces of the second fin 22', 22".

In accordance with an embodiment, the first fin 21 and the second fin 22 are connected to each other by a connecting portion 43 interposed between the rear end of first fin 41 and the rear end of second fin 42.

According to a different embodiment, not shown in the Figures, the rear end of first fin 41 and the rear end of second fin 42 are directly connected, joined to each other, and the two first fin lateral surfaces 21' and 21'' and the two second fin lateral surfaces 22' and 22'' are joined with shape continuity to each other.

According to another embodiment, the first fin 21 and the second fin 22 are separate from each other, in which between the rear end of first fin 41 and the rear end of second fin 42 there is an empty space which separates them.

In accordance with an embodiment, the connecting portion 43 defines two opposite lateral connecting surfaces 44 and 45, flat and parallel to each other and parallel to the first fin plane P1 and to the second fin plane P2, in which the value of the width of the connecting portion 43, measured between the two lateral connecting surfaces 44 and 45, orthogonally to the first fin plane P1 and to the second fin plane P2, is equal to the value of the width of the rear end of first fin 41 and to the value of the width of the rear end of second fin 42.

In accordance with an embodiment, the first fin connecting surface 21‴ is equal to the second fin connecting surface 22‴.

This configuration is particularly advantageous, since it doubles the useful life of the tool. Indeed, the tool is initially mounted with the first fin connecting surface 21‴ directed towards the specimen, so as to perform the impact tests by means of this connecting surface. After a certain number of impact tests, the aforesaid first fin connecting surface 21‴ is worn and does not allow further tests to be performed. At this point, the same impact tool 1 is rotated about the inversion axis 27, so as to arrange the second fin connecting surface 22‴ in the same position in which the first fin connecting surface 21‴ was located during the performance of the previous impact tests. Therefore, with equal mechanical resilience properties of the specimens tested in the two test campaigns, this second fin 22 will thus be able to perform a number of impact tests approximately equal to those performed by means of the first fin 21, thus doubling the overall useful life of the impact tool 1.

In accordance with an embodiment, the first fin connecting surface 21‴ is different from the second fin connecting surface 22‴.

In fact, the two opposite connecting surfaces of the first and second fin may be configured with different geometries to perform impact tests different from one another. To convert the tester between the two different types of impact test, it is sufficient to rotate the impact tool by 180° about the inversion axis 27 to bring the second fin connecting surface 22‴ into the position in which the first fin connecting surface 21‴ was located during the previous test, or vice versa, using the same impact tool for both types of test. Therefore, this configuration is particularly advantageous as it reduces the purchase cost of the impact tools; in fact, a double-fin tool costs less than two single-fin tools. Thus, a reduction of the average cost of the tool is achieved.

In accordance with an embodiment, at least one preceding claim, in which at least one of said first fin connecting surface 21‴ and said second fin connecting surface 22''' is a curved surface according to a single predefined radius of curvature R1.

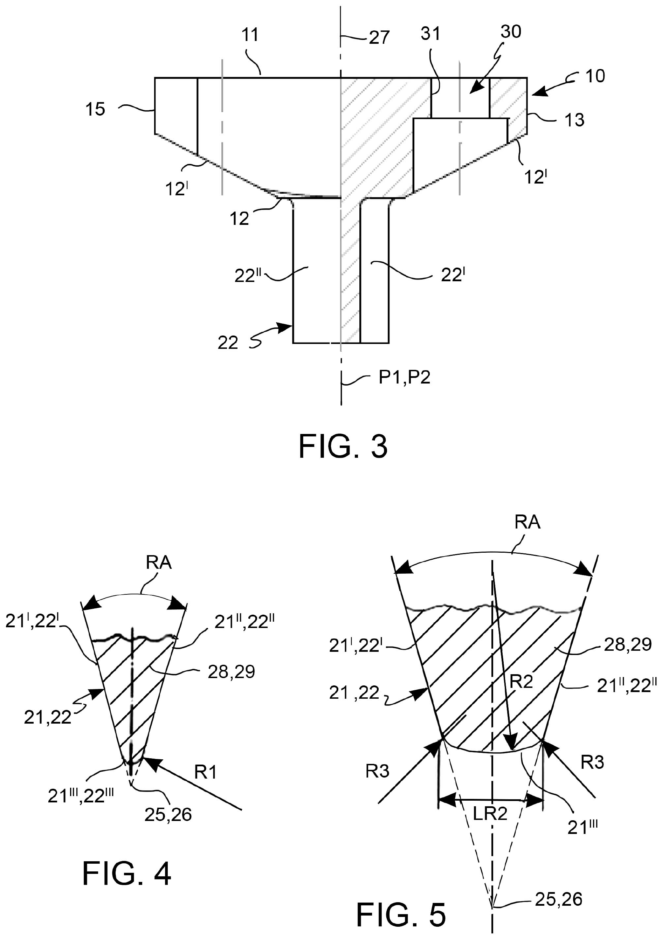

In this regard, see Figure 4. The intersection between a cross-section plane orthogonal to the first fin straight line of incidence 25 or the second fin straight line of incidence 26 and the first fin connecting surface 21‴ or the second fin connecting surface 22‴ is a curved line having a single radius of curvature R1.

Such a geometry is regulated by the UNI EN 148-2 standard, in particular with reference to a type of impact tool defined "R2", which defines a preset value for an opening angle RA between the lateral surfaces of the fin 21' and 21‴ or 21'' and 22", of 30°±1°, and a preset value of the radius of curvature R1 of 2mm +0.5/0.

According to an embodiment of the present invention, the first fin and/or the second fin may be made in accordance with these dimensions.

In accordance with an embodiment, at least one of the first fin connecting surface 21''' and the second fin connecting surface 22‴ is a curved surface having a central surface section having a predetermined central radius of curvature R2 and two lateral surface sections having two predetermined lateral radii of curvature R3, in which the two prefixed lateral radii of curvature R3 have values equal to each other and less than the value of said predetermined central radius of curvature R2.

In this regard, see the Figure 5. The intersection between a cross-section plane orthogonal to the first fin straight line of incidence 25 or second fin straight line of incidence 26 and the first fin connecting surface 21‴ or the second fin connecting surface 22‴ is a curved line formed by a central curved-line section having a preset central radius of curvature R2 and two lateral curved-line sections having lateral radii of curvature equal to each other and having a value smaller than the value of the central radius of curvature R2.

Such a geometry is regulated by the UNI EN 148-2 standard, in particular with reference to a type of impact tool defined "R8", which defines a preset value for an opening angle RA between the fin lateral surfaces 21' and 21" or 21" and 22", of 30°±1°, a preset value of the central radius of curvature R2 of 8 mm +0.5/0, a preset value of the lateral radii of curvature R3 of 0.25 mm +0.5/-0.05, and a preset value of width of the central segment LR2 measured orthogonally to the fin plane P1 or P2, of 4 mm ± 0.05.

The aforesaid standard provides, for both types "R2" and "R8", a predetermined width value of the rear end 41, 42 of the fin from 10 mm to 18 mm.

In accordance with an embodiment, the coupling surface 11 of the base body 10 comprises a flat surface orthogonal to the central inversion axis 27.

In accordance with an embodiment, not shown in the Figures, the coupling surface 11 may comprise a central protrusion coaxial with the inversion axis 27 adapted to couple with a corresponding recess in the impact tool coupling seat 109 in the head 108 of the pendulum hammer, or a central recess coaxial with the inversion axis 27 adapted to couple with a corresponding protrusion in the impact tool coupling seat 109 in the head 108 of the pendulum hammer, in which the section orthogonal to the inversion axis 27 of the protrusion and of the recess is symmetrical with respect to said inversion axis 27.

In accordance with an embodiment, the front surface 12 of the base body 10 comprises a flat surface orthogonal to the central inversion axis 27.

In accordance with an embodiment, the front surface 12 of the base body 10 comprises two opposite lateral surface portions 12', flat and inclined towards the outside, moving towards said coupling surface 11 and symmetrical with respect to the first fin plane P1 and the second fin plane P2.

In accordance with an embodiment, lateral surfaces of base body 13, 14, 15, 16 are symmetrical with respect to said central inversion axis 27.

In accordance with an embodiment, the lateral surfaces of base body 13, 14, 15, 16 overall form a single cylindrical surface coaxial to said inversion axis 27.

In accordance with an embodiment, the lateral surfaces of base body 13, 14, 15, 16 collectively form a single lateral surface having a section orthogonal to the inversion axis 27, having the shape of an ellipse coaxial with the inversion axis 27, and a major axis of the ellipse arranged on said first fin plane P1 and second fin plane P2.

In accordance with an embodiment, the lateral surfaces of base body 13, 14, 15, 16 comprise two first lateral surfaces 13, 15 parallel to the first fin plane P1 and to the second fin plane P2 and equidistant from the inversion axis 27, and or in which the lateral surfaces of base body 13, 14, 15, 16 comprise two second lateral surfaces 15, 16 orthogonal to the first fin plane P1 and to the second fin plane P2 and equidistant from the central inversion axis 27.

In accordance with an embodiment, the removable engagement means 30 comprise at least one pair of through holes 31, 32 extending through said base body 10, in which the holes of the pair of through holes 31, 32 are equal to each other, parallel to the central inversion axis 27, diametrically opposed with respect to the central inversion axis 27, and equally spaced from the central inversion axis 27.

The through holes are configured to be crossed by respective screws, not shown, screwable into corresponding threaded holes obtained in the impact tool seat 109 of the pendulum hammer head 108.

In accordance with an embodiment, the engagement means 30 comprise two pairs of through holes 31, 32 in which the holes of each pair pass through said base body 10, in which the holes of the pair of through holes 31, 32 are equal to each other, parallel to the central inversion axis 27, diametrically opposed with respect to the central inversion axis 27 and equally spaced from the central inversion axis 27.

In accordance with an embodiment, the base body 10 comprises at least one pair of threaded extraction holes 33, 34 passing through the base body 10, in which the holes of the pair of threaded extraction holes 31, 32 are equal to each other, parallel to the central inversion axis 27, diametrically opposed with respect to the central inversion axis 27, and equally spaced from the central inversion axis 27.

According to another aspect of the present invention, the aforesaid objects and advantages are achieved by a pendulum impact tester 100 for resilience testing of a specimen, comprising a base 101, at least one upright 102 extending from the base 101, a specimen holder 103, for example associated with or connected to the base 101, defining a specimen seat 104, an oscillating pendulum hammer 106 pivotally connected to the at least one upright 102 about a horizontal axis of oscillation 107 so as to oscillate along an oscillation plane orthogonal to the horizontal axis of oscillation 107, passing through the specimen seat 104 in an impact direction 111.

The pendulum hammer 106 comprises a hammer head 108 opposite to the horizontal axis of oscillation 107 and defining an impact tool coupling seat 109.

The pendulum impact tester 100 comprises an impact tool 1 according to any one of the features described above, in which the coupling surface 11 of the tool base body 10 is coupled to the impact tool coupling seat 109, and in which the impact tool 1 is selectively securable in two positions rotated 180 degrees with respect to each other about said inversion axis 27.

In a first position of the aforesaid two positions, the first fin plane P1 lies on the plane of oscillation, and the intersection between the first fin connecting surface of 21‴ and the first fin plane P1 is arranged in a radial direction DR with respect to the axis of oscillation 107, and the first fin connecting surface 21‴ is directed in a predetermined direction of impact 111 approaching the specimen seat 104.

In a second position of the aforesaid two positions, the second fin plane P2 lies on the plane of oscillation, and the intersection between the second fin connecting surface of 22‴ and the second fin plane P2 is arranged in a radial direction DR with respect to the axis of oscillation 107, and the second fin connecting surface 22‴ is directed in a predetermined direction of impact 111 approaching the specimen seat 104.

Those skilled in the art may make changes and adaptations to the embodiments of the device described above or replace elements with others which are functionally equivalent in order to meet contingent needs without departing from the scope of the following claims. Each of the features described as belonging to a possible embodiment may be made irrespective of the other embodiments described.

## Claims

1. Impact tool (1) suitable to be mounted in a pendulum impact tester (100) for resilience testing of a specimen, said pendulum impact tester (100) comprising a base (101), at least one upright (102) extending from said base (101), a specimen holder (103) defining a specimen seat (104), an oscillating pendulum hammer (106) pivotally connected to said upright (102) about a horizontal axis of oscillation (107) so as to oscillate along an oscillation plane orthogonal to said horizontal axis of oscillation (107) and passing through said specimen seat (104) according to a predetermined direction of impact (111) approaching said specimen seat (104), said pendulum hammer (106) comprising a hammer head (108) opposed to said axis of horizontal oscillation (107) and defining a coupling seat for impact tool (109),
wherein said impact tool (1) comprises:
- a tool base body (10) defining a coupling surface (11) suitable for coupling to said impact tool seat (109), and an opposite frontal surface (12), said coupling surface (11) and said frontal surface (12) being connected to each other by means of side surfaces of base body (13, 14, 15, 16);
- removable engagement means (30) capable of removably engaging said base body (10) in said impact tool coupling seat (109);
- a first impact fin (21) extending protruding from said front surface (12) along a first fin plane (P1), said first impact fin (21) defining two lateral surfaces (21', 21") incident with each other at a first fin straight line of incidence (25) lying on said first fin plane (P1) and connected to each other in proximity of said first fin straight line of incidence (25) by means of a first fin connecting surface (21‴),, said first fin (21) defining a first fin cross-section (28) orthogonal to said first fin straight line of incidence (25), said first fin cross-section being constant along said first fin straight line of incidence (25) and symmetrical to said first fin plane (P1);
- a second impact fin (22) extending protruding from said front surface (12) along a second fin plane (P2), said second impact fin (22) defining two lateral surfaces (22', 22'') incident with each other at a second fin straight line of incidence (26) lying on said second fin plane (P2) and connected to each other in proximity of said second fin straight line of incidence (26) by means of a second fin connecting surface (22‴), said second fin (22) defining a second fin cross-section (29) orthogonal to said second fin straight line of incidence (26), said second fin cross-section being constant along said second fin straight line of incidence (26) and symmetrical with respect to said second fin plane (P2),
wherein said first fin plane (P1) and said second fin plane (P2) are coincident with each other, and wherein said first fin straight line of incidence (25) and said second fin straight line of incidence (26) are parallel to each other, and wherein said first fin connecting surface (21‴) and said second fin connecting surface (22‴) are directed away from each other, said impact tool (1) defining a central inversion axis (27) lying on said first fin plane (P1) and of said second fin plane (P2), parallel to said first fin straight line of incidence (25) and to said second fin straight line of incidence (26) equidistant from an intersection line between said first fin connecting surface (21‴) and said first fin plane (P1) and from an intersection line between said second fin connecting surface (22‴) and said second fin plane (P2), wherein said coupling surface (11) and said removable engagement means (30) have a shape symmetrical with respect to said central inversion axis (27) so as to allow two different mountings of said impact tool rotated 180 degrees with respect to each other about said central inversion axis (27).

2. Impact tool according to claim 1, wherein said two lateral surfaces (21', 21") of said first impact fin (21) are flat surfaces, and/or wherein said two lateral surfaces (22', 22") of said second impact fin (22) are flat surfaces.

3. Impact tool (1) according to claim 1 or 2, wherein said first fin (21) defines a rear end of first fin (41) opposite to said first fin connecting surface (21‴), and wherein said second fin (22) defines a rear end of second fin (42) opposite said second fin connecting surface (22‴), facing said rear end of first fin (41),
wherein the value of the width of said rear end of said first fin (41) measured in a direction orthogonal to said first fin plane (P1) between said two lateral surfaces (21', 21") of said first fin, is equal to the value of the width of said rear end of said second fin (42) measured in a direction orthogonal to said second fin plane (P2) between said two lateral surfaces (22', 22") of said second fin.

4. Impact tool (1) according to claim 3, wherein said first fin (21) and said second fin (22) are connected to each other by a connecting portion (43) interposed between said rear end of first fin (41) and said rear end of second fin (42).

5. Impact tool (1) according to claim 4, wherein said connecting portion (43) defines two opposite lateral connection surfaces flat and parallel to each other and parallel to said first fin plane (P1) and to said second fin plane (P2), wherein the value of the width of said connection portion (43) measured between said two lateral connection surfaces orthogonally to said first fin plane (P1) and to said second fin plane (P2) is equal to the value of the width of said rear end of said first fin (41) and to the value of the width of said rear end of said second fin (42).

6. Impact tool (1) according to at least one preceding claim, wherein said first fin connecting surface (21‴) is equal to said second fin connecting surface (22‴).

7. Impact tool (1) according to at least one of claims 1 to 5, wherein said first fin connecting surface (21") is different from said second fin connecting surface (22‴).

8. Impact tool (1) according to at least one preceding claim, wherein at least one of said first fin connecting surface (21‴) and said second fin connecting surface (22‴) is a curved surface according to a single predefined radius of curvature (R1).

9. Impact tool (1) according to at least one preceding claim, wherein at least one of said first fin connecting surface (21‴) and said second fin connecting surface (22‴) is a curved surface having a central surface section having a predetermined central radius of curvature (R2) and two lateral surface sections having two predetermined lateral radii of curvature (R3), in which the two prefixed lateral radii of curvature (R3) have values equal to each other and less than the value of said predetermined central radius of curvature (R2).

10. Impact tool (1) according to at least one preceding claim, wherein said coupling surface (11) of said base body (10) comprises a flat surface orthogonal to said central inversion axis (27).

11. Impact tool (1) according to at least one preceding claim, wherein said front surface (12) of said base body (10) comprises a flat surface orthogonal to said central inversion axis (27).

12. Impact tool (1) according to at least one preceding claim, wherein said lateral surfaces of base body (13, 14, 15, 16) are symmetrical with respect to said central inversion axis (27).

13. Impact tool (1) according to claim 12, wherein said lateral surfaces of said base body (13, 14, 15, 16) comprise two first lateral surfaces (13, 15) parallel to said first fin plane (P1) and to said second fin plane (P2) and equidistant from said central inversion axis (27), and/or wherein said lateral surfaces of said base body (13, 14, 15, 16) include two second lateral surfaces (15, 16) orthogonal to said first fin plane (P1) and to said second fin plane (P2) and equidistant from said central inversion axis (27).

14. Impact tool (1) according to at least one preceding claim, wherein said removable engagement means (30) comprise at least one pair of through holes (31, 32) passing through said base body (10), wherein the holes of said pair of through holes (31, 32) are equal to each other, parallel to said central inversion axis (27), diametrically opposed each other with respect of said central inversion axis (27) and equally spaced from said central inversion axis (27).

15. Impact tool (1) according to at least one preceding claim, wherein said base body (10) comprises at least one pair of threaded extraction holes (33, 34) passing through said base body (10), wherein the holes of said pair of threaded extraction holes (31, 32) are equal to each other, parallel to said central inversion axis (27), diametrically opposed each other with respect to said central inversion axis (27) and equally spaced from said central inversion axis (27).

16. A pendulum impact tester (100) for resilience testing of a specimen, comprising a base (101), at least one upright (102) extending from said base (101), a specimen holder (103) defining a specimen seat (104) an oscillating pendulum hammer (106) pivotally connected to said upright (102) about a horizontal axis of oscillation (107) so as to oscillate along an oscillation plane orthogonal to said horizontal axis of oscillation (107) passing through said specimen seat (104) in an impact direction (111), said pendulum hammer (106) comprising a hammer head (108) opposed to said horizontal oscillation axis (107) and defining a coupling seat for impact tool (109),
wherein said pendulum impact tester (100) comprises an impact tool (1) according to at least one preceding claim, wherein said coupling surface (11) of said tool base body (10) is coupled to said coupling seat for impact tool (109), and wherein said impact tool (1) is selectively fixable in two positions rotated 180° relative to each other with respect to said central inversion axis (27) wherein,
in a first position of said two positions, said first fin plane (P1) lies on said plane of oscillation, and the intersection between said first fin connecting surface of (21‴) and said first fin plane (P1) is arranged in a radial direction (DR) with respect to said axis of oscillation (107), and said first fin connecting surface (21‴) is directed in a predetermined direction of impact (111) approaching said specimen seat (104), and
in a second position of said two positions, said second fin plane (P2) lies on said plane of oscillation and the intersection between said second fin connecting surface (22‴) and said second fin plane (P2) is arranged in a radial direction (DR) with respect to said axis of oscillation (107) and said second fin connecting surface (22‴) is directed in a predetermined direction of impact (111) approaching said specimen seat (104).
